# EUROPEAN PATENT SPECIFICATION

(11) **EP 2 914 395 B1**
(45) Date of publication and mention of the grant of the patent: **27.02.2019**
(21) Application number: 13850442.8
(22) Date of filing: 04.11.2013
(51) Int. Cl.: B22F 7/00, B22F 7/02, B32B 5/12, B32B 7/00, B32B 7/12, B32B 27/08, B32B 27/18, B32B 27/30, B32B 27/32, B32B 3/12, F41H 5/04, B32B 5/28, H01M 2/02, B32B 5/02, B32B 5/22, B32B 5/26, B32B 27/12, B32B 27/34, B32B 27/36, B32B 3/28

(54) **HIGH STRENGTH, LIGHT WEIGHT COMPOSITE STRUCTURE, METHOD OF MANUFACTURE AND USE THEREOF**
HOCHFESTE, LEICHTGEWICHTIGE VERBUNDSTRUKTUR, VERFAHREN ZUR HERSTELLUNG UND VERWENDUNG DAVON
STRUCTURE COMPOSITE LÉGÈRE À HAUTE RÉSISTANCE, SON PROCÉDÉ DE FABRICATION ET D'UTILISATION

(30) Priority: 05.11.2012 US 201261722448 P; 15.03.2013 US 201361789177 P
(43) Date of publication of application: 09.09.2015
(73) Proprietor: PolyOne Corporation, Avon Lake, OH 44012 (US)
(72) Inventor: PILPEL, Edward D., Avon, Connecticut 06001 (US); GORDON, D. Michael, Lone Tree, Colorado 80124 (US); PILPEL, Benjamin D., Centennial, Colorado 80122 (US); SPIEGEL, Jonathan, Aurora, Colorado 80013 (US)
(74) Representative: Bjerkéns Patentbyrå KB (Stockholm)
(86) International application number: PCT/US2013/068318
(87) International publication number: WO 2014/071306

(56) References cited:
- EP-A2- 0 293 612
- EP-B1- 0 164 739
- WO-A1-98/32589
- WO-A1-2012/020426
- WO-A1-2012/021073
- WO-A1-2012/021073
- GB-A- 1 467 766
- JP-A- H11 277 651
- US-A- 5 030 305
- US-A- 5 309 690
- US-A- 5 571 369
- US-A1- 2004 198 125
- US-A1- 2004 198 125
- US-A1- 2006 178 064
- US-A1- 2007 232 168
- US-A1- 2007 232 168
- US-A1- 2007 238 379
- US-A1- 2009 263 620
- US-A1- 2010 279 060
- US-A1- 2011 281 063
- US-A1- 2012 276 320
- US-B1- 7 976 932
- US-B1- 7 976 932

## Description

### TECHNICAL FIELD

The present disclosure is generally directed to composite structures and particularly directed to composite structures configured for use as lightweight and high strength structures in building and transportation applications, such as cargo carrier applications including trailer floors, ceilings, doors and walls, and to methods of their manufacture.

### BACKGROUND

There are many types of cargo carriers including, but not limited to, freight transport vehicles, rail cars, air cargo carriers, over the road trailers such as refrigerated and non-refrigerated truck trailers, ships, and so forth. Cargo carriers typically include a cargo holding body or container. As an example, a typical trailer includes a roof, a floor and side walls extending between the roof and floor, and a rear door for access to the cargo holding body. Wood has been employed as the material for the inner walls and/or liners of such a trailer. However, a problem with use of such material is that the wood is easily damaged during loading and unloading of the cargo holding body contents with the use of, e.g., fork lifts and other machine handling equipment. Also, another problem with the use of wood is the relatively high weight of the material, which can decrease the fuel efficiency during transport of the cargo and thus increasing shipping costs.

Composite structures, such as laminated panels, are known and typically include a core material with a coating thereon. However, a problem with some prior composite laminated panels is that they are formed of materials that do not efficiently bond with one another. Also. some prior composite laminated panels are not strong enough to withstand mechanical stresses and thus can be subjected to tearing. Moreover, prior composite panels often include a metal frame for support, and thus are relatively heavy and may not be cost effective. For example, U.S. Patent No. 5,493,826 discloses a structural panel including extruded aluminum framing defining the dimensions of the desired panel and containing therein an aluminum strip grid of spacers extending between the upper and lower sides of the aluminum frame. In addition, US-2009/263620, US-2010/279060 and US-2007/238379 disclose various aspects of composite structures.

Accordingly, what is needed is an alternative, light weight and high strength composite structure for use as, e.g., panels including fire retardant ballistic panels, and other structures in applications such as cargo carrier roofs, ceilings, and doors, among other applications. Thus, there is also a need in industries concerning armor or ballistic materials for, e.g., vehicles and personnel, particularly with respect to fire retardancy requirements.

### SUMMARY

The invention concerns a composite structure according to claim 1.

Further, there is disclosed a method of making the composite structure, which method is not part of the invention. The method comprises heating or sonic welding intersection points of the connecting elements and the ridges to form a one piece integrally bonded structure.

### BRIEF DESCRIPTION OF THE DRAWINGS

FIG. 1 is a schematic illustration of a perspective view of a composite structure, according to embodiments;
FIG. 2 is a schematic depiction of a core comprising a rib and a connecting element, prior to bonding, according to embodiments.
FIG. 3 is a schematic depiction of the rib and connecting element of FIG. 2 shown prior to bonding and then as bonded, according to embodiments.
FIG. 4A is a schematic, perspective view of an assembled core, according to embodiments;
FIG. 4B is a front view of the assembled core of FIG. 4A;
FIG. 5 is a schematic illustration of a non-limiting example of layers/plies, which could be included as a laminate of the composite structure, according to embodiments;
FIG. 6 is a general schematic depiction of an apparatus used to produce a composite laminate of the composite structure, according to embodiments;
FIG. 7 is a rear view of a refrigerated trailer including a composite structure, according to embodiments;
FIG. 8 is a perspective view of an air cargo container including a composite structure, according to embodiments;
FIG. 9 is a perspective view of a rail cargo container including a composite structure, according to embodiments;
FIG. 10 is a perspective view of an intermodal container including a composite structure, according to embodiments;
FIG. 11 is a schematic illustration of a perspective, expanded view of a composite structure, according to embodiments, and including a ridged core; and
FIG. 12 is a schematic illustration of the composite structure of FIG. 11 in non-expanded form.

### DETAILED DESCRIPTION

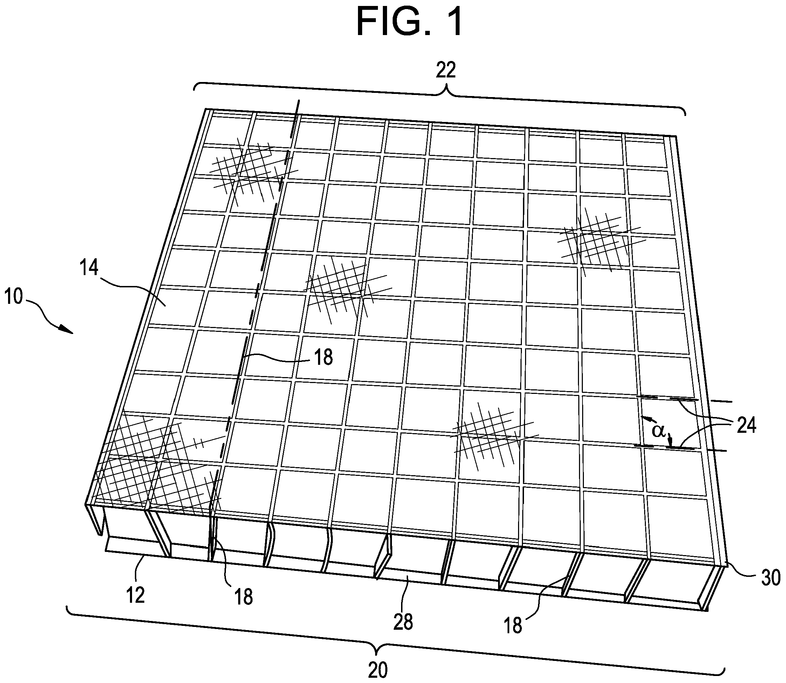

One aspect disclosed herein is directed to a composite structure (10), as shown in FIGS. 1, 2, 4A and 4B, comprising a first outer skin (12); a second outer skin (14); and a core (16) sandwiched between the first outer skin (12) and the second outer skin (14). The core (16) comprises: plurality of spaced apart ridges (18) between the first outer skin (12) and the second outer skin (14), each of the spaced apart ridges (18) extending from one end (20) of the composite structure (10) to an opposite end (22); and a plurality of connecting elements (24) between the first outer skin (12) and the second outer skin (14) configured to intersect with the ridges (18) to form open channels (26) within the core (16). Both the first outer skin (12), the second outer skin (14) and the core (16) comprises: a plurality of composite plies including at least a first composite ply and a second composite ply, the first composite ply and the second composite ply each comprising a plurality of unidirectional, continuous, parallel fibers in a thermoplastic matrix; the plurality of composite plies being bonded together to form a composite laminate, the further features of the composie structure of the invention being given by claim 1.

It is initially noted that while the embodiment of the composite structure (10) is shown in FIG. 1 as being substantially square in shape, the configurations of the composite structure (10) are not limited to this shape, as the composite structure (10) can be formed into any suitable shape, size and thickness depending upon the end use article, as further described below.

The plurality of spaced apart ridges (18) extending from one end (20) of the composite structure (10) to the opposite end (22) provide internal strength to the structure (10). It is noted that FIG. 1 illustrates a ridge (18) with dashed lines for ease of reference to denote that the ridge (18) is located between the first outer skin (12) and second outer skin (14) and thus not visible from the top of second outer skin (14). While the ridges (18) are typically rectangular in shape, the ridges (18) may be any suitable shape, length and thickness depending on the shape, length and thickness desired for the composite structure (10). As a non-limiting example, according to some embodiments, the length of ridge (18) is between about 6 feet and about 100 feet, the height of ridge (18) as measured between the first outer skin (12) and the second outer skin (14) is between about .5 inches and about 6 inches, and the thickness of the ridge (18) is between about .006 inches and about 5 inches. However, it will be appreciated that other suitable dimensions may be employed depending upon the application and needs thereof, and thus the afore-referenced lengths, heights and thicknesses may be more or less depending upon specific needs and application of the composite structure (10).

Moreover, while FIG. 1 depicts the plurality of ridges (18) extending substantially parallel to each other from one end (20) of the composite structure (10) to the opposite end (22) of the composite structure (10), other configurations could be employed. For example, the ridges (18) could extend in a non-parallel fashion, in a combination of parallel and non-parallel configurations, some ridges (18) could intersect each other, and so forth.

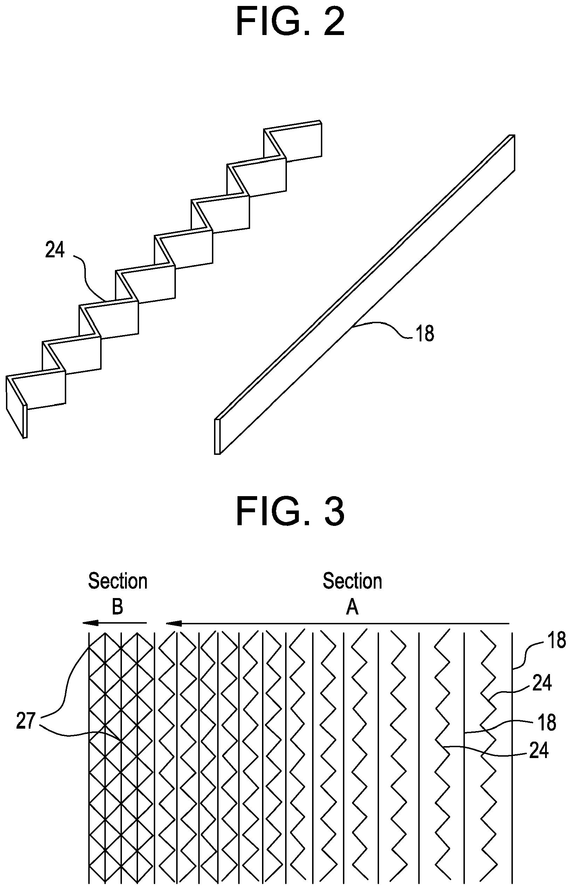

FIG. 2 schematically depicts a typical shape for a ridge (18) and connecting element (24) of core (16), however, the core (16) is not so limited. Specifically, depicted in the embodiment of FIG. 2 is a portion of core (16), prior to bonding, comprising a ridge (18) in substantially rectangular shape and a one-piece connecting element (24).

As in the case of ridge (18), the connecting element (24) may be any suitable shape, length and thickness. As a non-limiting example, according to some embodiments, the length of the connecting element (24) is between about 6 feet and about 100 feet, the height of the connecting element (24) as measured between the first outer skin (12) and the second outer skin (14) is between about .5 inches and about 6 inches, and the thickness of the connecting element (24) is between about .006 inches and about .5 inches. According to some embodiments, the height of the ridges (18) and the connecting elements (24) are substantially the same. Such a configuration is shown, e.g., in FIG. 1, although the invention is not limited in this regard. Thus, it will be appreciated that other suitable dimensions may be employed for the connecting element (24) depending upon the application and needs thereof, and thus the afore-referenced lengths, heights and thicknesses may be more or less depending upon specific needs and application of the composite structure (10).

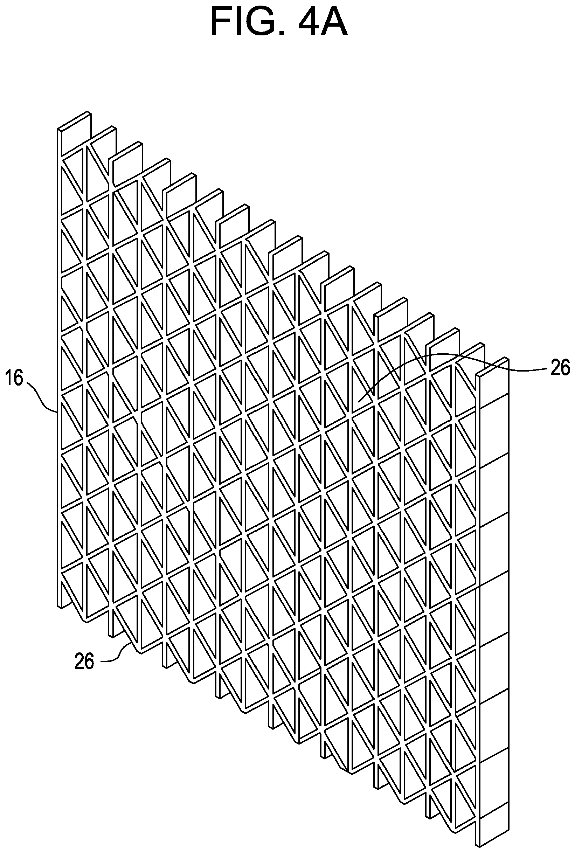

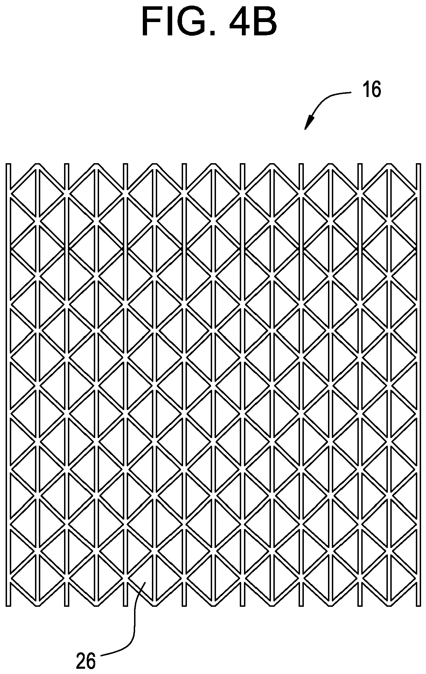

The exemplary connecting element (24) shown in FIG. 2 comprises a one-piece, repeating zig-zag stepped pattern (e.g., "ribbon candy" configuration) configured to extend, e.g., from one end (20) of the composite structure (10) to the opposite end (22). FIG. 3 schematically depicts a plurality of the connecting elements (24) and ridges (18) of FIG. 2. In FIG. 3, near section A, it will be appreciated that the connecting elements (24) and ridges (18) progress closer together as you move in the direction of the arrows. This general schematic illustration of FIG. 3 shows how upon heating or sonic welding, as further described below, the components of the core (16) are joined together, as shown in the direction of the arrows in FIG. 3, until the ridges (18) and connecting elements (24) bond together at, e.g., sonic weld points (27), as shown at section B of FIG. 3. FIG. 4A schematically illustrates a perspective view of the resultant assembly of the core (16) after this heating/welding; and FIG. 4B schematically illustrates a front view of the assembled core (16) of FIG. 4A.

It is noted that each connecting element (24) is not limited to a one-piece zig-zag "ribbon candy" shape as illustrated in FIG. 2. As noted above, the connecting elements (24) can comprise any suitable shape. For example, in the embodiment shown in FIG. 1, a plurality of connecting elements (24) intersect a ridge (18) at various sections thereby forming box-like open channels or voids (26) in the composite structure (10). It is noted that a connecting element (24) is depicted in FIG. 1 with dashed lines merely to illustrate that it is located between the first outer skin (12) and the second outer skin (14) and thus not visible from the top of the second outer skin (14). The angle of intersection (α) between the connecting element (24) and ridge (18) shown in FIG. 1 is about 90 degrees, however, other angles of intersection such as between about 0 degrees and about 120 degrees, including between about 30 degrees and about 60 degrees, could be employed. Thus, suitable configurations for the connecting elements (24) and resultant open channels or voids (26) include, e.g., square or box-like, rectangular, diamond, triangular, combinations thereof, and so forth. Accordingly, the shape of the channels (26) formed as a result of the intersection of the ridges (18) and connecting elements (24) could vary, and are most typically box-like/square, as shown in FIG. 1, or triangular, as shown in FIG. 4.

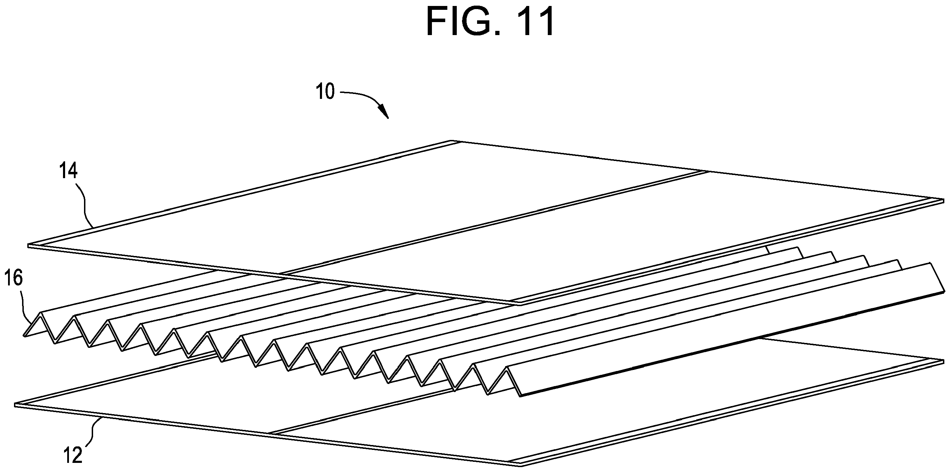

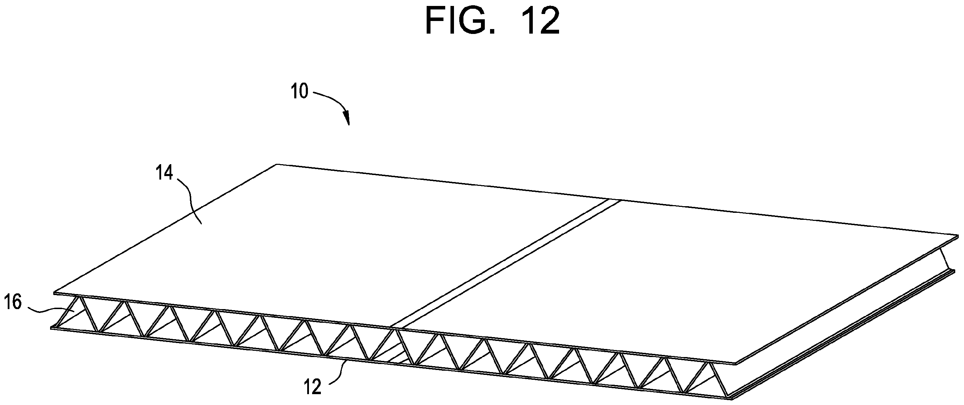

FIGs. 11 and 12 depict an embodiment of the composite structure (10) comprising a ridged core (16) structure shown in a horizontal orientation, although embodiments of the invention are not limited by particular orientation. Accordingly, in some embodiments, the core (16) can comprise a one-piece construction, e.g., a one-piece, continuous connecting element (24) of desired shape, such as zig-zag ("ribbon candy" configuration), and so forth.

The core (16) is sandwiched between the first outer skin (12) and the second outer skin (14), as shown, e.g., in FIGs. 1, 11 and 12. As further shown therein, the first and second outer skins (12, 14) can optionally form an edge (28, 30), respectively, according to embodiments.

Regarding the materials for the first outer skin (12), the second outer skin (14), the core (16), e.g., the ridges (18) and the connecting elements (24), as well as the assembly and construction thereof, the following non-limiting materials and processes are noted. While particular thermoplastic materials are referenced below, it is noted that embodiments of the composite structure (10), including the core (16) and first and second outer skins (14, 16), can be made of out any suitable thermoplastic resins, with and/or without reinforcements, as well as include any suitable thermoplastic coverings/layers.

The first outer skin (12), the second outer skin (14) and the core (16) comprise: a plurality of composite plies including at least a first composite ply and a second composite ply, the first composite ply and the second composite ply each comprising a plurality of fibers in a thermoplastic matrix; the plurality of composite plies being bonded together to form a composite laminate.

The composite laminate of the first outer skin (12), the second outer skin (14) and the core (16), include at least two composite plies, e.g., a first composite ply and a second composite ply, bonded together. Each ply comprises a plurality of fibers. The plurality of fibers of each of the first composite ply and the second composite ply are impregnated with a thermoplastic matrix material comprising, e.g., polyethylene, which is further described below, to form wetted, very low void composite plies, optionally to the substantial exclusion of thermosetting matrix material, according to embodiments. Optionally, the fibers of each ply are encapsulated in the thermoplastic matrix material.

The plurality of fibers in the first composite ply are substantially parallel to each other, and the plurality of fibers in the second composite ply are substantially parallel to each other. Thus, the fibers of each ply are longitudinally oriented (that is, they are aligned with each other), and continuous across the ply. A composite ply is sometimes referred to herein as a ply or sheet and characterized as "unidirectional" in reference to the longitudinal orientation of the fibers.

Further, the plurality of fibers in the first composite ply are disposed cross-wise (transverse) to the plurality of fibers in the second composite ply. For example, the fibers in the first composite ply are disposed cross-wise to the plurality of fibers in the second composite ply at an angle of greater than 0 degrees to 90 degrees, specifically at an angle of about 15 degrees to about 75 degrees.

Additionally, the plurality of fibers in the first composite ply are different from the plurality of fibers in the second composite ply. Thus, various types of fibers, including different strength fibers, are used in a composite ply, according to embodiments. Example fibers include E-glass and S-glass fibers. E-glass is a low alkali borosilicate glass with good electrical and mechanical properties and good chemical resistance. Its high resistivity makes E-glass suitable for electrical composite laminates. The designation "E" is for electrical.

S-glass is a higher strength and higher cost material relative to E-glass. S-glass is a magnesia-alumina-silicate glass typically employed in aerospace applications with high tensile strength. Originally, "S" stood for high strength. Both E-glass and S-glass are particularly suitable fibers for use with embodiments disclosed herein.

E-glass fiber may be incorporated in a wide range of fiber weights and thermoplastic polymer matrix material. The E-glass ranges from about 10 to about 40 ounces per square yard (oz./sq. yd.), specifically about 19 to about 30, and more specifically about 21.4 to about 28.4 oz./sq. yd. of reinforcement, according to embodiments.. As a non-limiting example, a minimum weight of a cross (X) ply could be approximately 18 oz./sq. yd. of composite. At 70% fiber by weight, the reinforcement would be 70% of 18 oz.

The quantity of S-glass or E-glass fiber in a composite ply optionally accommodates about 40 to about 90 weight percent (wt. %) thermoplastic matrix, specifically about 50 to about 85 wt. % and, more specifically, about 60 to about 80 wt. % thermoplastic matrix in the ply, based on the combined weight of thermoplastic matrix plus fiber.

Other fibers may also be incorporated, specifically in combination with E-glass and/or S-glass, and optionally instead of E- and/or S-glass. Such other fibers include ECR, A and C glass, as well as other glass fibers; fibers formed from quartz, magnesia alumuninosilicate, non-alkaline aluminoborosilicate, soda borosilicate, soda silicate, soda lime-aluminosilicate, lead silicate, non-alkaline lead boroalumina, non-alkaline barium boroalumina, non-alkaline zinc boroalumina, non-alkaline iron aluminosilicate, cadmium borate, alumina fibers, asbestos, boron, silicone carbide, graphite and carbon such as those derived from the carbonization of polyethylene, polyvinylalcohol, saran, aramid, polyamide, polybenzimidazole, polyoxadiazole, polyphenylene, PPR, petroleum and coal pitches (isotropic), mesophase pitch, cellulose and polyacrylonitrile, ceramic fibers, metal fibers as for example steel, aluminum metal alloys, and the like.

Where relatively high performance is required and cost justified, high strength organic polymer fibers formed from an aramid exemplified by Kevlar or various carbon fibers may be used. High performance, unidirectionally-oriented fiber bundles generally have a tensile strength greater than 7 grams per denier. These bundled high-performance fibers may be any one of, or a combination of, aramid, extended chain ultra-high molecular weight polyethylene (UHMWPE), poly [p-phenylene-2,6-benzobisoxazole] (PBO), and poly[diimidazo pyridinylene (dihydroxy) phenylene]. The use of these very high tensile strength materials is particularly useful for composite panels having added strength properties.

Accordingly, fiber types known to those skilled in the art can be employed without departing from the broader aspects of the embodiments disclosed herein. For example, aramid fibers such as those marketed under the trade names Twaron, and Technora; basalt, carbon fibers such as those marketed under the trade names Toray, Fortafil and Zoltek; Liquid Crystal Polymer (LCP), such as, but not limited to, LCP marketed under the trade name Vectran. Based on the foregoing, embodiments also contemplate the use of organic, inorganic and metallic fibers either alone or in combination.

The composite plies optionally include fibers that are continuous, chopped, random comingled and/or woven, according to embodiments. In particular embodiments, composite plies as described herein contain longitudinally oriented fibers to the substantial exclusion of non-longitudinally oriented fibers.

Since fibers within a composite ply are longitudinally oriented, a composite ply in a composite laminate can be disposed with the fibers in a specified relation to the fibers in one or more other composite plies of the laminate.

Fibers within a tape or ply are parallel to each other, and the composite laminate comprises a plurality of plies with the fibers of one ply being disposed cross-wise in relation to the fibers in an adjacent ply, for example, at an angle of up to 90 degrees related to the fibers in the adjacent ply. The fibers are evenly distributed across the ply, according to embodiments. Examples include cross-ply tapes or laminates, e.g., material comprising two plies of fibers in a thermoplastic matrix material with the fibers in one ply disposed at about 90 degrees to the fibers in the other ply.

The thermoplastic matrix of one or more plies of the composite laminate described herein for use as the material for the core (16), including ridges (18) and connecting elements (24), the first outer skin (12) and second outer skin (14) comprises any suitable polymeric matrix, e.g., a thermoplastic matrix comprising polyethylene, polypropylene or combinations thereof, according to some non-limiting embodiments. Non-limiting examples of suitable thermoplastic materials include, but are not limited, to polyamide (nylon), PEI (polyetherimide), polyethylene, polypropylene, polyethylene terephthalate, polyphenylene sulfide (PSS), polyether ether ketone (PEEK), polyvinylidene fluoride (PVDF), flouoro polymers in general and other engineering resins, as well as combinations/copolymers thereof, and so forth. Thus, as further described below, polyvinylidene fluoride (PVDF) alone or in any combination with the other matrix constituents noted herein may be employed in the matrix and such an incorporation of this PVDF material can impart fire resistance to the resultant structure. Accordingly, polyvinylidene fluoride (PVDF) may be employed in the thermoplastic matrix material in any suitable amount to impart desired fire resistance/retardant characteristics, and in any combination with the other materials described herein, according to embodiments. Suitable amounts of the PVDF include, but are not limited to, e.g., at least about .2 wt.% PVDF, between about .5 wt.% and about 20 wt.% PVDF and between about 1 wt.% and about 15 wt.% PVDF, in the thermoplastic matrix based on the wt.% of the thermoplastic matrix.

While any suitable thermoplastic matrix material may be employed according to embodiments, it has been determined, however, that the use of polyethylene in the thermoplastic matrix material can result in a composite laminate having improved puncture resistance with less weight per unit of puncture protection compared to, e.g., polypropylene based composite laminates. Polyethylene also is more consistent in pricing than polypropylene, which tends to be highly variable in price due, in part, to the complex manufacturing processes needed to produce the propylene monomer. As described in further detail below, because the weight of a polyethylene composite laminate is less than, e.g., a polypropylene composite laminate, more cargo can be carried in a given container made or lined with such a material, which improves fuel efficiency and cost effectiveness in, e.g., trucks, railcars and ships in which they are used.

According to embodiments, copolymers of polyethylene and polypropylene are also useful as the thermoplastic matrix. For example, copolymers with more than about 50 wt.% polyethylene are useful with additions of polypropylene of up to about 50 wt.%, depending upon the application and property requirements thereof.

In further embodiments, the thermoplastic matrix of one or more of the plies comprises coextruded polyethylene and polyethylene terephthalate (sometimes written as poly(ethylene terephthalate)), commonly abbreviated as PET, in any suitable weight percent combinations. For example, PET polymers that are employed, according to embodiments, include thermoplastic PET polymer resins used in synthetic fibers; beverage, food and other liquid containers; thermoforming applications; and engineering resins in combination with glass fiber. PET homopolymers may be modified with comonomers, such as CHDM or isophthalic acid, which lower the melting temperature and reduce the degree of crystallinity of PET. Thus, the resin can be plastically formed at lower temperatures and/or with lower applied force. These PET homopolymers and copolymers are coupled with an optional release film for, e.g., later painting and such optional layers can also be laminated to the base composite structure, according to embodiments.

Accordingly, the polymeric matrix material for use in various embodiments disclosed herein comprises a polyethylene thermoplastic polymer. Thermoplastic loading by weight can vary depending upon the physical property requirements of the intended use of the product. It is noted that polyethylene is classified into different categories, which are mostly based on density and branching, and the mechanical properties of the polyethylene depend on variables such as the extent and type of branching, crystal structure and molecular weight. Particular examples include low-density polyethylene (LDPE), ultra-high-molecular-weight polyethylene (UHMWPE), ultra-low-molecular-weight polyethylene (ULMWPE or PE-WAX), high-molecular-weight polyethylene (HMWPE), high-density polyethylene (HDPE), high-density cross-linked polyethylene (HDXLPE), cross-linked polyethylene (PEX or XLPE), medium-density polyethylene (MDPE), linear low-density polyethylene (LLDPE), very-low-density polyethylene (VLDPE), and combinations thereof. Particularly useful types of polyethylene include HDPE, LLDPE and especially LDPE, as well as combinations thereof. Further details regarding particular properties of various types of polyethylene for use in the thermoplastic matrix described herein, according to embodiments, are set forth below.

LDPE has a density range of 0.910-0.940 g/cm³ and a high degree of short and long chain branching. Accordingly, the chains typically do not tightly pack into the crystal structure. Such material does exhibit strong intermolecular forces as the instantaneous-dipole induced-dipole attraction is less. This results in a lower tensile strength and increased ductility. LDPE is created by free radical polymerization. The high degree of branching with long chains gives molten LDPE unique and desirable flow properties.

UHMWPE is a polyethylene with a molecular weight in the millions, typically between about 3 and 6 million. The high molecular weight makes UHMWPE a very tough material, but can result in less efficient packing of the chains into the crystal structure as evidenced by densities of less than high density polyethylene (for example, 0.930-0.935 g/cm³). UHMWPE can be made through any catalyst technology, with Ziegler catalysts being typical. As a result of the outstanding toughness and cut of UHMWPE, wear and excellent chemical resistance, this material is useful in a wide range of diverse applications.

HDPE has a density of greater than or equal to 0.941 g/cm³. HDPE has a low degree of branching and thus strong intermolecular forces and tensile strength. HDPE can be produced by chromium/silica catalysts, Ziegler-Natta catalysts and/or metallocene catalysts. The lack of branching is ensured by an appropriate choice of catalyst (for example, chromium catalysts or Ziegler-Natta catalysts) and reaction conditions.

PEX (also denoted as XLPE) is a medium to high-density polyethylene containing cross-link bonds introduced into the polymer structure, which change the thermoplast into an elastomer. High-temperature properties are thus improved, flow reduced and chemical resistance enhanced.

MDPE has a density range of 0.926-0.940 g/cm³. MDPE can be produced with use of chromium/silica catalysts, Ziegler-Natta catalysts and/or metallocene catalysts. MDPE has good shock and drop resistance properties. This material also is less notch sensitive than HDPE and also exhibits better stress cracking resistance than HDPE.

LLDPE has a density range of 0.915-0.925 g/cm³. LLDPE is a substantially linear polymer with a significant number of short branches, commonly made by copolymerization of ethylene with short-chain alpha-olefins (for example, 1-butene, 1-hexene and 1-octene). LLDPE has higher tensile strength than LDPE, and exhibits higher impact and puncture resistance than LDPE. LDPE also exhibits properties such as toughness, flexibility and relative transparency.

VLDPE has a density range of 0.880-0.915 g/cm³. VLDPE is a substantially linear polymer with high levels of short-chain branches, commonly made by copolymerization of ethylene with short-chain alpha-olefins (for example, 1-butene, 1-hexene and 1-octene). VLDPE is typically produced using metallocene catalysts due to, for example, the greater co-monomer incorporation exhibited by these catalysts. VLDPEs also can be used as impact modifiers when blended with other polymers.

In addition to the particular polymers noted above, copolymers/combinations of the any of the foregoing are contemplated for use according to embodiments disclosed herein. As a further non-limiting example, in addition or alternative to copolymerization with alpha-olefins, ethylene (or polyethylene) can also be copolymerized with a wide range of other monomers and ionic compositions that create ionized free radicals. Examples include vinyl acetate, the resulting product being ethylene-vinyl acetate copolymer (EVA), and/or suitable acrylates. Additionally, the thermoplastic matrix can comprise polyvinylidene fluoride (PVDF) alone or in any combination with the other matrix constituents noted herein. It is noted that the PVDF can be employed to impart fire resistance to the resultant structure.

According to embodiments disclosed herein, the thermoplastic matrix of one or more composite plies of the composite laminates described herein comprises polyethylene, alone or in combination with other polymers/copolymers/constituents. For instance, polyethylene can be employed as the matrix material along with a high molecular weight thermoplastic polymer, including but not limited to, polypropylene, nylon, PEI (polyetherimide) and copolymers thereof, as well as combinations of any of the foregoing.

According to embodiments, a composite ply contains about 60 to about 10 wt.% polymeric matrix, specifically about 50 to about 10 wt.%, and more specifically about 40 to about 15 wt.%. Other exemplary ranges include about 40 to about 20 wt.% and about 30 to about 25 wt.%. It is noted that the foregoing weight percents are the weight percents of the polymeric matrix material of the ply, by weight of polymeric matrix material plus fibers.

In an exemplary embodiment, the fiber content in one or more composite plies is greater than about 50 wt.% (based upon weight of polymeric matrix plus fibers of the ply), specifically up to about 85 wt.%, and while various types of fibers are suitable, as described above, glass fibers are particularly suitable to achieve stiffness.

In a further exemplary embodiment, a composite laminate as described herein comprises at least a first ply and a second ply that are bonded together with their respective fibers in transverse relation to each other, and the first ply contains fibers that are different from the fibers in the second ply, wherein the matrix of one or both of the first and second plies comprises polyethylene. Thus, the composite laminate comprises at least two different kinds of fibers. In other words, fibers in at least a first composite ply are disposed in transverse relation to different fibers in an adjacent second composite ply, optionally at 90 degrees to the different fibers in the adjacent second composite ply. For ease of expression, a first composite ply and a second composite ply so disposed are sometimes described herein as being in transverse relation to each other (optionally at 90 degrees to each other) without specific mention of the fibers in each of the plies.

The phrase "different fibers" should be broadly construed to mean that the composite laminate includes least two composite plies whose fibers are made from two different materials or different grades of the same material. For example, as described in further detail below with respect to uses of the composite laminates described herein, one face of panel that comprises a composite laminate could be formed using Kevlar 129 fiber while the rear or back portion of the panel could be formed using a higher performing material.

In a particularly useful embodiment, a composite laminate comprises composite plies that contain E- and S-glass fibers respectively and that are oriented at angles of about 90° relative to one another in ply configuration.

An exemplary configuration for plies in a composite laminate having at least a first ply and a second ply is to have the second ply at 90° to the first ply. Other angles may also be chosen for desired properties with less than 90 degrees for the second sheet. Certain embodiments utilize a three sheet configuration wherein a first sheet is deemed to define a reference direction (i.e., zero degrees), a second sheet is disposed at a first angle (for example, a positive acute angle) relative to the first sheet (for example, about 45 degrees) and a third sheet is disposed at a second angle different from the first angle (for example, a negative acute angle) relative to the first sheet (that is, at an acute angle in an opposite angular direction from the second sheet (for example, about -45 degrees or, synonymously, at a reflex angle of about 315 degrees relative to the first sheet in the same direction as the second sheet). Thus the second and third sheets may or may not be perpendicular to each other. The thermoplastic matrix allows for easy relative motion of the fibers of adjacent plies during final molding of an article of manufacture.

According to further embodiments, at least two layers of composite plies of about the same areal density are arranged in a 0 to 90 degree configuration or, alternatively at angles from about 15 degrees to about 75 degrees. It is noted that the term "areal density" (typically expressed as pounds per square foot (lbs./sq. ft.)) can be employed to make comparisons of relative strength of different layer configurations. A higher areal density corresponds to a higher puncture strength of the layer. Also, composite laminates comprising at least two layers of composite plies, with the second layer having a greater areal density than the first layer, also are employed, according to embodiments. A non-limiting example of a suitable areal density for a composite laminate, according to embodiments, is about 1 to 10 lbs./sq. ft.

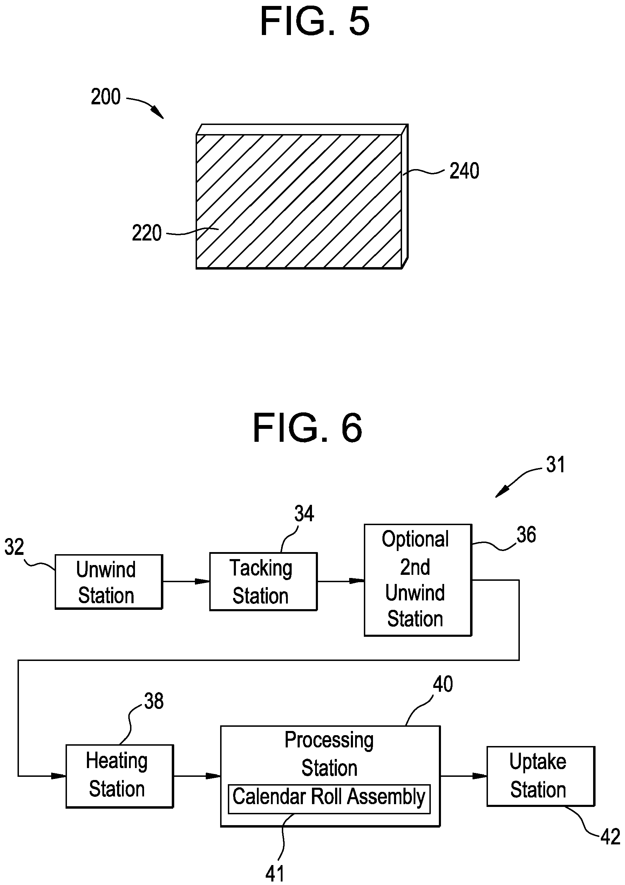

FIG. 5 schematically illustrates a non-limiting example of a composite laminate 200, which can be employed for at least one of the core (16) including ridges (18) and/or connecting elements (24), the first outer skin (12) and the second outer skin (14), according to embodiments. Composite laminate 200 comprises at least a first composite ply 220 and a second composite ply 240. However, composite laminate could comprise any desired number of plies in configurations such as cross-ply, tri-ply, quad-ply, and so forth. As described above, according to embodiments, the thermoplastic matrix material of at least one ply comprises polyethylene. The composite plies 220 and 240 of this non-limiting example are each a unidirectional sheet or ply including longitudinally oriented fibers therein. Composite plies 220 and 240 can be separately produced in a continuous process and stored in individual rolls. A composite laminate as described herein, such as the exemplary composite laminate 200 illustrated in FIG. 5, comprises at least two composite plie bound together with their respective fibers in, e.g., transverse relation to each other. It is noted that any suitable material, e.g., especially comprising polyethylene, could be employed for one or more of these layers. Moreover, FIG. 5 illustrates a non-limiting example of one particular arrangement for various layers and it will be appreciated that the order and materials therefore could vary as desired. Thus, layers for plies 220 and 240 could be presented in any desired combination and order.

It is further noted that one or more additional layers could be employed in the construction shown in FIG. 5. For example, one or more layers of high strength fibers, e.g., commingled thermoplastic fibers, glass fibers, and so forth, could placed anywhere in the layup (e.g., between the layers and/or as outer layers of the construction) to function as, e.g., a structural layer. An example for the structural layer is to use a commingled laminate product. A suitable commercially available product for this layer is TWINTEX®, which is a registered trademark by Fiber Glass Industries. According to the manufacturer, TWINTEX® is a thermoplastic glass reinforcement (roving) made of commingled E-Glass and polypropylene filaments, which can be woven into highly conformable fabrics. Consolidation is completed by heating the roving above the melting temperature of the polypropylene matrix (180°C-230°C) and applying pressure before cooling under pressure. Examples of glass content include, by weight, 53%, 60% and 70%. Examples of the weave include plain and twill. The size and shape of the structural layer, as well as the other layers of FIG. 1, can be tailored as needed, depending upon the desired application.

It is further noted that the polymeric matrix material for the core (16) and its components thereof (e.g., ridges (18) and connecting elements (24)) typically comprises a thermoplastic material, as described above. However, it is further noted that, according to embodiments, the polymeric matrix material for the first outer skin (12) and/or the second outer skin (14) can comprise a a thermoset material. For example, the fibers as described above and in the amounts described above could also be incorporated in a thermoplastic and thermoset polymeric material for each or both of the first outer skin (12) and second outer skin (14), depending upon the desired application. Non-limiting examples of thermoset matrix materials include phenolics, polyesters, epoxides, combinations thereof, and so forth.

Various methods can be employed by which fibers in a ply may be impregnated with, and optionally encapsulated by, the matrix material, including, for example, a doctor blade process, lamination, pultrusion, extrusion, and so forth. It should be understood that other composite plies of composite laminates and other composite materials, composite laminates, panels and so forth described herein may also be produced by the herein processes and apparatuses, according to embodiments.

More particularly, exemplary processing equipment suitable for making the fiber reinforced composite plies (e.g. first and second composite plies 220, 240 comprising a plurality of fibers in a matrix comprising, e.g., polyethylene) described herein include a standard belt laminating system using coated belts, such as laminators commercially available from Maschinenfabrik Herbert Meyer GmbH located at Herbert-Meyer-Str., 1, D-92444 Roetz, Germany.

It is further noted that various other methods could be employed to, e.g., bond composite plies together to form a composite laminate in addition to, or as an alternative to the foregoing. Such methods include stacking the composite plies one on the next to form a composite laminate and applying heat and/or pressure, or using adhesives in the form of liquids, hot melts, reactive hot melts or films, epoxies, methylacrylates and urethanes to form the composite laminate panel. Sonic vibration welding and solvent bonding can also be employed. In general, a composite laminate can be constructed from a plurality of plies by piling a plurality of plies one on the next and subjecting the plies to heat and pressure, e.g., in a press, to melt adjacent plies together.

U.S. Patent No. 8,201,608, assigned to the same assignee herewith, discloses suitable apparatuses and methods for making sheets of composite material. Such apparatuses and methods could be used to produce the composite laminates, materials and structures described herein.

Accordingly, reference below is made to such appartuses and processes, with modification of some reference numerals and so forth for tailoring to the composite laminates and structures described herein.

An example of a suitable apparatus, which can be used to produce, e.g., a composite laminate 200 of FIG. 5, among other composite laminates and structures disclosed herein, is shown by the general block depiction of FIG. 6 and denoted by reference numeral 31. As shown in FIG. 6, apparatus 31 comprises an unwind station 32. During operation, composite material such as, e.g., a composite ply comprising a plurality of fibers in a thermoplastic matrix comprising, e.g., polyethylene is fed or unwound from rolls in the unwind station 32 for further processing, according to embodiments. The apparatus 31 further includes a tacking station 34 adjacent to the unwind station 32, where additional layers of composite material can be tacked onto the composite material being unwound from the unwind station 32. These additional layers can be configured so that the fibers forming part of the additional layers of composite material can be oriented at different angles relative to the fibers in the composite material being unwound from the unwind station 32. However, embodiments are not limited in this regard, as the fibers forming part of the additional layers can also be oriented substantially parallel to the fibers forming part of the composite being unwound from the unwind station 32. The apparatus 31 includes an optional second unwind station 36 adjacent to the tacking station, where at least one additional layer of composite material can be unwound from rolls of composite material thereon. These layers can be unwound on top of the composite material unwound from the first unwind station 32 and any additional layers added at the tacking station 34. There is a heating station 38 downstream from the tacking station 34, where layers of composite material are heated so that they can bond to one another. There is also a processing station 40 downstream from the heating station 38. The processing station 40 includes at least one calender roll assembly 41, as explained in greater detail below. An uptake station 42 is positioned downstream of the processing station 40 for winding composite material laminate thereon. The overall progress of composite material from the unwind station 32 to the uptake station 42 is referred to herein as "the process direction," indicated by the arrows in Fig. 6. The terms "upstream" and "downstream" are sometimes used herein to refer to directions or positions relative to the process direction.

It is noted that the particular shape, size and composition of the composite laminate for, e.g., the ridges (18), connecting elements (24), first outer skin (12), and second outer skin (12) can be tailored with use of the afore-described processing equipment, as desired. Once the desired composite laminate is constructed for, e.g., each component of the composite structure (10), the composite structure (10) can be assembled into the desired shape and construction, and heated/sonic welded to bond the components together. A plurality of composite structures (10) could also be adhesively bonded together. More particularly, the construction can be heated and formed/bent to the desired shape under suitable temperatures such as, e.g., between about 65,5°C (150°F) and about 482°C (900°F). Moreover, according to embodiments, a bonding layer, such as a thermoplastic film, could be positioned adjacent to the connecting elements (24) to assist in bonding and the construction heated to, e.g., between 65,5°C (150°F) and about 260°C (500°F).

Composite structure (10) including, e.g., composite laminates described herein and produced with use of, e.g., the foregoing apparatuses and processes, can be used in a wide variety of end use applications, especially cargo handling container components and cargo carrier applications, as well as building and household applications. In some embodiments, the composite structure (10) is configured for use as walls, liners, panels, flooring, containers and other structures in building and transportation applications, such as airplanes, cargo carriers including trailers, and so forth. For example, such materials can be used to fabricate panels, liners, containers, flooring, e.g., subfloors, doors, ceiling portions, wall portions and wall coverings, and so forth, of various sizes and strengths. Different types of materials can be used alone or in combination with one another depending upon the desired application. Such articles as described herein provide strong and durable structures that can withstand impact of, e.g., machinery during loading and unloading of cargo contents. By employing a matrix comprising polyethylene, alone or in combination with another material, in one or more ply of the composite laminates as described herein, such increase in strength and durability can be realized, according to embodiments. Furthermore, such composite structures are environmentally friendly, emit minimal vapor during processing, and are easy to handle, as well as clean, according to embodiments. For example, composite structure (10) can comprises a smooth outer layer comprising non-fiber reinforced polyethylene, among other coatings.

More particularly, it has been determined that the composite structures (10) described herein can be configured as resultant end use products including, but not limited to, armor and ballistic applications such as fire resistant/retardant ballistic composite panels, walls, doors, panels, liners, containers, ceiling portions, housing structure portions, household decorative articles, e.g., ornaments, and so forth. Such article exhibit advantageous properties in terms of, e.g., strength, light weight, light transmission/substantial translucency, abrasion resistance, antimicrobial/antibacterial properties, stiffness, UV resistance, and so forth, according to embodiments.

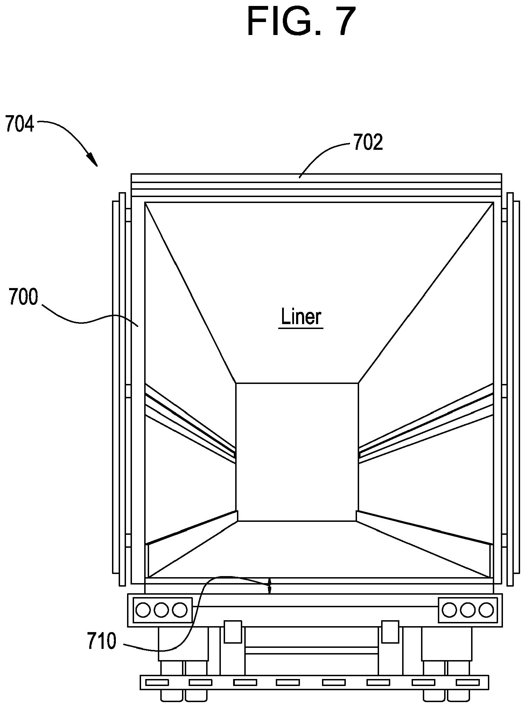

Further, non-limiting examples of particular end use products/applications for the composite structure (10) disclosed herein are set forth below. Referring to FIG. 7, the composite structure (10) disclosed herein can be used as, e.g., a liner for interior portions of over the road trailers or other transportation vehicles, vessels, containers, and so forth. FIG. 7 illustrates a liner 700 in the interior portion 702 of an exemplary over the road trailer 704. The liner 700, according to embodiments, can provide a composite panel exhibiting better properties than, e.g., standard chopped glass thermoset products. For example, liner 700 comprising polyethylene can be lighter and more cleanable, more stain resistant, and more abrasion resistant than some polypropylene based panels. Liner 700 can be located as an interior wall liner or wall covering, as well as a roof liner. Thus, liner 700 has applications for refrigerated containers (reefers), wall coverings, as well as other transport applications. Liner 700 can be configured as a durable, semi-rigid structure or panel specifically designed and formulated to improve thermal efficiencies in refrigerated containers such as reefers, according to embodiments.

In accordance with further embodiments and end use applications, and as illustrated in FIG. 7, the composite structure (10) disclosed herein can be configured as a panel 710 for a floor or subfloor of, e.g., a trailer or other vehicle, vessel, container and so forth. The panel 710 also can be covered with a coating, such as a durable flooring material also made from the composite materials and/or composite laminates disclosed herein, according to embodiments.

It is further noted that the embodiments disclosed herein can comprises the compositions and configurations in any combinations of the embodiments.

Moreover, it is noted that the composite structure (10) can be framed or typically frameless, according to embodiments. In a framed construction, it is noted that metal framing features, e.g., aluminum framing, could be employed for cosmetic purposes. However, framing is not necessary to provide structural support, according to embodiments, as the frameless composite structure (10) can provide the needed strength and stiffness due to the constituents of its construction.

It should be further recognized that the composite laminates described herein in general, also are applicable to many types of cargo carriers, such as trailers, vans, delivery vehicles, rail cars, aircraft, ships, shipping containers used therein, and so forth. Additionally, it is the intent herein that the word "trailer" can include all such cargo carriers, and to use the words "shipping container" can thus include all shipping containers used therein.

Accordingly, in accordance with still further end use applications, while the composite structure (10) comprising composite laminates described herein have been described above, according to embodiments, as generally being configured as panels for over the road trailer truck applications, other applications are within the scope of embodiments described herein, such as, e.g., interior liners/panels configured for rail cars, interior liners/panels configured for aircrafts, interior liners/panels for containers, such as intermodal containers, building and housing structures, and so forth.

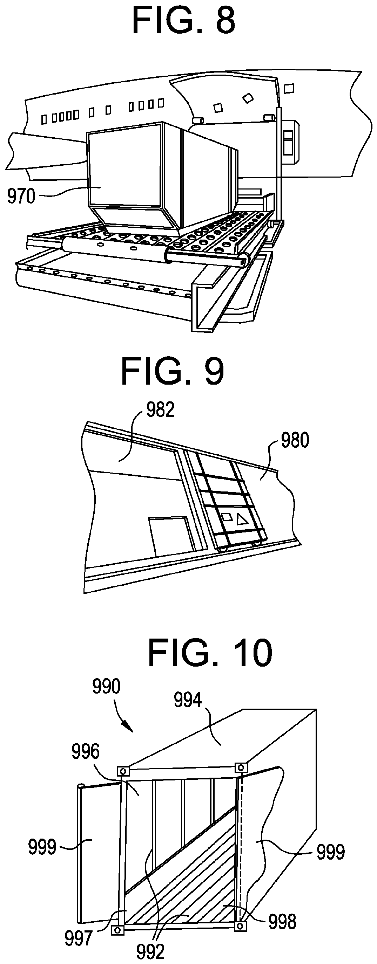

Moreover, structures such as the container or housing unit itself also could be fabricated and/or refurbished using the composite materials, structures and laminates disclosed herein. As a non-limiting example of the foregoing, FIG. 8 illustrates a perspective view of an air cargo container 970, which can include a composite structure (10) as described herein, on an inner portion of the container 970, according to embodiments. The container 970 also could be made from the composite material and/or used for refurbishment, as explained above.

In accordance with further end use applications, FIG. 9 is a perspective view of a rail car 980 including a composite structure (10) as a liner 982, according to embodiments. The liner disclosed herein can be located at various locations of a container body such as on the interior portion of a rail car wall, among other locations.

FIG. 10 further illustrates a schematic perspective view of an intermodal container 990 including a composite structure (10) as a composite liner 992, according to embodiments. The intermodal container 990 comprises a roof portion 994, interior side walls 996, a floor 998 and door portion 999. As described herein, the liner according to embodiments, can be located at various locations of, .e.g., a container or other structures. For example, as shown in FIG. 10, liner 992 can be located on floor 998 as a covering or integral therewith. Liner 992 also can be located on at least a portion of interior side walls 996, as well as be located on the interior portion of the roof portion 994. FIG. 10 further illustrates a scuff panel 997, which also can be made of and/or coated with the liner 992 described herein. It is further noted that the intermodal container 990 can be moved from one mode of transportation to another, such as from rail to ship to truck and so forth without the need to reload and unload the contents of the container. The size of the container 990 meets standard ISO requirements, according to embodiments. For example, the length can vary from 8 feet to 50 feet, and the height can vary from 8 feet to 9 feet, 6 inches.

It will be appreciated that the composite structures (10) could be attached to structures, as also explained above, such as being attached to interior flooring, side walls, roofing, scuff plates, as well as other container portions. Similarly, entire or portions of, e.g., air cargo, rail and intermodal containers, housing portions, decorative articles, e.g., ornaments, and so forth, could be made from the composite structure (10) disclosed herein. Still further, the panels, liners and structures described herein also could be employed as part or all of an outer surface of the structures described herein such as trailers containers and so forth. In such cases, UV and/or wear resistance properties should be included in the structures. Refurbishment with use of the composite structure (10), including panels, liners, and so forth, made therefrom are also included in embodiments.

Moreover, as noted above, the embodiments disclosed herein are also applicable as armor or ballistic materials for, e.g., vehicles and personnel. For example, the embodiments disclosed herein can be used as fire retardant ballistic composites and panels wherein, e.g., the thermoplastic matrix material comprises PVDF. As non-limiting example, the structures shown in, e.g., FIGs. 1, 5, 11 and 12 could be employed as fire retardant composite ballistic panels. The ballistic materials and panels can be used to fabricate, e.g., fire retardant portable ballistic shields, such as a ballistic clipboard used by a police officer, to provide fire retardant ballistic protection for fixed structures such as control rooms or guard stations, and to provide fire retardant ballistic protection for the occupants of vehicles, and so forth.

It is further noted that ballistic materials including panels can be tested in accordance with standards that evaluate their ability to withstand ballistic impact. Such standards, which are described briefly below, have been established by, e.g., the Department of Justice's National Institute of Justice entitled "NIJ Standard for Ballistic Resistant Protective Materials ('NIJ Standard"). As the ballistic threat posed by a bullet or other projectile depends, e.g., on its composition, shape, caliber, mass and impact velocity, the NIJ Standard has classified the protection afforded by different armor grades as follows: Type II-A (Lower Velocity 357 Magnum and 9 mm), Type II (Higher Velocity 357 Magnum and 9 mm); Type III-A (44 Magnum, Submachine Gun and 9 mm), Type III (High-Powered Rifle), and Type IV (Armor-Piercing Rifle).

More particularly, Type II-A (Lower Velocity 357 Magnum and 9 mm): Armor classified as Type II-A protects against a standard test round in the form of a 357 Magnum jacketed soft point, with nominal masses of 10.2 g and measured velocities of 381 +/- 15 meters per second. Type II-A ballistic materials also protect against 9 mm full metal jacketed rounds with nominal masses of 8 g and measured velocities of 332 +/- 12 meters per second.

Type II (Higher Velocity 357 Magnum; 9mm): This armor protects against projectiles akin to 357 Magnum jacketed soft point, with nominal masses of 10.2 g and measured velocities of 425 +/- 15 meters per second. Type II ballistic materials also protect against 9 mm full metal jacketed rounds with nominal masses of 8g and measured velocities of 358 +/- 12 meters per second.

Type III-A (44 Magnum, Submachine Gun 9 mm): This armor provides protection against most handgun threats, as well as projectiles having characteristics similar to 44 Magnum, lead semiwadcutter with gas checks, having nominal masses of 15.55 g and measured velocities of 426 +/- 15 meters per second. Type III-A ballistic material also protects against 9 mm submachine gun rounds. These bullets are 9 mm full metal jacketed with nominal masses of 8g and measured velocities of 426 +/- 15 meters per second.

Type III (High Powered Rifle): This armor protects against 7.62 mm (308 Winchester®) ammunition and most handgun threats.

Type IV (Armor-Piercing Rifle): This armor protects against 30 caliber armor piercing rounds with nominal masses of 10.8 g and measured velocities of 868 +/- 15 meters per second.

In furtherance to the above, other tests for ballistic materials include the V₅₀ test as defined by MIL-STD-622, V₅₀ Ballistic Test for Armor. U.S. Patent No. 7,598,185 further describes this test, and the contents of this patent are hereby incorporated by reference. For example, the V₅₀ Ballistic Test may be defined as the average of an equal number of highest partial penetration velocities and the lowest complete penetration velocities which occur within a specified velocity spread. A 0.020 inch (0.51mm) thick 2024-T3 sheet of aluminum is placed 6±1/2 inches (152±12.7 mm) behind and parallel to the target to witness complete penetrations. Normally at least two partial and two complete penetration velocities are used to compute the V₅₀ value. Four, six, and ten-round ballistic limits are frequently used. The maximum allowable velocity span is dependent on the armor material and test conditions. Maximum velocity spans of 60, 90, 100, and 125 feet per second (ft/s) (18, 27, 30, and 38 m/s) are frequently used.

Advantageously, embodiments disclosed herein including fire retardant ballistic panels described herein may achieve at least one of the protection levels against a projectile as defined by the afore-referenced NIJ Standard Armor grades II-A, II, III-A, III and IV when the projectile is directed at the panel, as well as may pass the afore-referenced V₅₀ test. Additionally, it should be appreciated that while the composite laminates of the composite structure (10) have been described in some embodiments as comprising two plies, embodiments are not limited in this regard as any suitable multiple of plies (e.g., cross-ply, tri-ply, quad-ply, and so forth) could be employed for any laminate of the composite structure (10), the composition of which can vary depending on the intended end use application. As such, for example, structures, such as panels, liners, containers, and so forth, comprising a ply of less expensive lower performing E-Glass fibers in a thermoplastic matrix comprising polyethylene and a ply of more expensive, higher performing S-Glass fibers also in a thermoplastic matrix comprising polyethylene can be fabricated.

According to embodiments, formation of a panel from plies comprising thermoplastic matrix materials to the substantial exclusion of thermosetting matrix materials can be achieved at lower pressure and for shorter periods than are needed for a thermosetting matrix material to cure. In addition, panels comprised of plies containing thermoplastic matrix material comprising polyethylene may require no degassing and generate little or no VOCs. Optionally, metals or ceramics or other materials can be added to a composite panel as described herein. Moreover, once fabricated, the panels and other structures described herein can be coated as desired, e.g., with a further composite, an elastomer, a metal housing etc. to protect against ultraviolet, moisture or other environmental influences. In addition, additives can be incorporated into the matrix material(s) for such things as fire resistance, smoke and toxicity resistance, and for cosmetic reasons

The terms "first," "second," and the like, herein do not denote any order, quantity, or importance, but rather are used to distinguish one element from another. In addition, the terms "a" and "an" herein do not denote a limitation of quantity, but rather denote the presence of at least one of the referenced item. When a numerical phrase includes the term "about" the phrase is intended to include, but not require, the precise numerical value stated in the phrase. Moreover, it is noted that features of any and/or all embodiments described herein could be combined in any combination with any and/or all features of other embodiments disclosed herein.

## Claims

1. A composite structure (10) comprising:
a first outer skin (12);
a second outer skin (14); and a
core (16) sandwiched between the first outer skin (12) and the second outer skin (14);
wherein the core (16) comprises: a plurality of spaced apart ridges (18) between the first outer skin (12) and the second outer skin (14), each of the spaced apart ridges (18) extending from one end (20) of the composite structure (10) to an opposite end (22); and a plurality of connecting elements (24) between the first outer skin (12) and the second outer skin (14) intersecting with the ridges (18) to form open channels (26) within the core (16);
**characterised in that** the ridges (18) of the core (16) and the connecting elements (24) of the core (16) each comprises a plurality of composite plies including at least a first composite ply and a second composite ply, the first composite ply and the second composite ply each comprising a plurality of unidirectional, continuous parallel fibers in a thermoplastic matrix, the plurality of composite plies being bonded together to form a composite laminate; and
both the first outer skin (12), and the second outer skin (14) comprise: a plurality of composite plies including at least a first composite ply and a second composite ply, the first composite ply and the second composite ply each comprising a plurality of unidirectional, continuous, parallel fibers in a thermoplastic matrix; the plurality of composite plies being bonded together to form a composite laminate, and
wherein the plurality of fibers in the first composite ply are parallel to each other, and the plurality of fibers in the second composite ply are parallel to each other,
wherein the plurality of fibers in the first composite ply are disposed cross-wise to the plurality of fibers in the second composite ply at an angle of greater than 0 degrees to 90 degrees, and
wherein the plurality of fibers in the first composite ply are different from the plurality of fibers in the second composite ply.

2. The composite structure (10) of claim 1, wherein at least one ridge (18) is rectangular in shape extending from the one end (20) to the opposite end (22).

3. The composite structure (10) of claim 1, wherein the ridges (18) and the connecting elements (24) are each between .5 inches and 6 inches in height as measured between the first outer skin (12) and the second outer skin (14).

4. The composite structure (10) of claim 1, wherein at least one connecting element (24) comprises a one piece, repeating zig-zag stepped pattern extending from the one end (20) to the opposite end (22) of the structure (10).

5. The composite structure (10) of claim 1, wherein the plurality of connecting elements (24) between the first outer skin (12) and the second outer skin (14) intersect with the ridges (18) to form at least one of: square open channels (26) within the core (16), diamond shaped open channels (26) within the core (16), triangular shaped open channels (26) within the core (16), and a combination thereof.

6. The composite structure (10) of claim 5, wherein the composite structure (10) is translucent.

7. The composite structure (10) of claim 1, wherein at least one of the first outer skin (12) and the second outer skin (14) comprises a coating thereon.

8. The composite structure (10) of claim 7, wherein the coating comprises at least one of an antimicrobial coating, an antibacterial coating, an abrasion resistant coating, a ultra-violet (UV) resistant coating, and a combination thereof.

9. The composite structure (10) of claim 1, wherein the core (16) comprises a tri-ply laminate and the first outer skin (12) and the second outer skin (14) each comprise a cross-ply laminate.

10. The composite structure (10) of claim 1, wherein the plurality of fibers in the first composite ply are disposed cross-wise to the plurality of fibers in the second composite ply at an angle of 15 degrees to 75 degrees.

11. The composite structure (10) of claim 1, wherein the plurality of fibers in the first composite ply are disposed at 90 degrees relative to the plurality of fibers in the second composite ply.

12. The composite structure (10) of claim 1, wherein the first composite ply and the second composite ply comprise fibers of different strength, and the first composite ply comprises E-glass fibers and the second composite ply comprises S-glass fibers.

13. A panel comprising the composite structure (10) of claim 6.

14. The panel of claim 13, wherein the panel comprises a smooth outer layer comprising non-fiber reinforced polyethylene.

15. A ceiling portion comprising the panel of claim 13, wherein the ceiling portion is configured for a cargo carrier.

16. A wall portion comprising the panel of claim 13, wherein the wall portion is configured for a cargo carrier.

17. A subfloor comprising the panel of claim 13, wherein the subfloor is configured for a cargo carrier.

18. A door comprising the panel of claim 13, wherein the door is configured for a cargo carrier.

19. A portion of a housing structure comprising the panel of claim 13.

20. An ornament comprising the composite structure (10) of claim 1.

21. The composite structure (10) of claim 1, wherein the thermoplastic matrix comprises at least one of polyethylene, polypropylene, polyvinylidene fluoride and a combination thereof.

22. The composite structure (10) of claim 1, wherein the thermoplastic matrix comprises a fire retardant material.

23. The composite structure (10) of claim 1, wherein the connecting elements (24) form an angle of between about 0 degrees and about 120 degrees with the ridges (18).

24. A construction comprising a plurality of the composite structure (10) of claim 5 adhesively bonded together.

25. The composite structure (10) of claim 1, wherein each of the spaced apart ridges (18) extend parallel from one end (20) of the composite structure (10) to the opposite end (22).

26. The composite structure (10) of claim 1, wherein the first outer skin (12) and/or the second outer skin (14) comprise a thermoset matrix material.

## Patentansprüche

1. Verbundstruktur (10), umfassend:
eine erste Außenhaut (12);
eine zweite Außenhaut (14); und einen
Kern (16), der sandwichartig zwischen der ersten Außenhaut (12) und der zweiten
Außenhaut (14) angeordnet ist;
wobei der Kern (16) Folgendes umfasst: eine Mehrzahl von voneinander beabstandeten Rippen (18) zwischen der ersten Außenhaut (12) und der zweiten Außenhaut (14), wobei sich jede der voneinander beabstandeten Rippen (18) von einem Ende (20) der Verbundstruktur (10) zu einem gegenüberliegenden Ende (22) erstreckt; und eine Mehrzahl von Verbindungselementen (24) zwischen der ersten Außenhaut (12) und der zweiten Außenhaut (14), welche die Rippen (18) kreuzen, um offene Kanäle (26) in dem Kern (16) zu bilden;
**dadurch gekennzeichnet, dass**
die Rippen (18) des Kerns (16) und die Verbindungselemente (24) des Kerns (16) jeweils
eine Mehrzahl von Verbundlagen umfassen, die zumindest eine erste Verbundlage und eine zweite Verbundlage enthalten, wobei die erste Verbundlage und die zweite Verbundlage jeweils eine Mehrzahl von unidirektionalen, kontinuierlichen parallelen Fasern in einer thermoplastischen Matrix umfassen, wobei die Mehrzahl von Verbundlagen miteinander verbunden sind, um ein Verbundlaminat zu bilden; und
sowohl die erste Außenhaut (12) als auch die zweite Außenhaut (14) Folgendes umfassen:
eine
Mehrzahl von Verbundlagen, die zumindest eine erste Verbundlage und eine zweite Verbundlage enthalten, wobei die erste Verbundlage und die zweite Verbundlage jeweils eine Mehrzahl von unidirektionalen, kontinuierlichen parallelen Fasern in einer thermoplastischen Matrix umfassen; wobei die Mehrzahl von Verbundlagen miteinander verbunden sind, um ein Verbundlaminat zu bilden und
wobei die Mehrzahl von Fasern in der ersten Verbundlage parallel zueinander sind und die Mehrzahl von Fasern in der zweiten Verbundlage parallel zueinander sind,
wobei die Mehrzahl von Fasern in der ersten Verbundlage quer zu der Mehrzahl von Fasern in der zweiten Verbundlage in einem Winkel von größer als 0 bis 90 Grad angeordnet sind und
wobei die Mehrzahl von Fasern in der ersten Verbundlage sich von der Mehrzahl von Fasern in der zweiten Verbundlage unterscheiden.

2. Verbundstruktur (10) nach Anspruch 1, wobei zumindest eine Rippe (18) eine rechteckige Form aufweist, die sich von dem einen Ende (20) zum gegenüberliegenden Ende (22) erstreckt.

3. Verbundstruktur (10) nach Anspruch 1, wobei die Rippen (18) und die Verbindungselemente (24) gemessen zwischen der ersten Außenhaut (12) und der zweiten Außenhaut (14) jeweils eine Höhe zwischen 0,5 und 6 Zoll aufweisen.

4. Verbundstruktur (10) nach Anspruch 1, wobei zumindest ein Verbindungselement (24) ein einteiliges, sich wiederholendes stufenförmiges Zickzackmuster umfasst, das sich von dem einen Ende (20) zum gegenüberliegenden Ende (22) der Struktur (10) erstreckt.

5. Verbundstruktur (10) nach Anspruch 1, wobei die Mehrzahl von Verbindungselementen (24) zwischen der ersten Außenhaut (12) und der zweiten Außenhaut (14) die Rippen (18) kreuzen, um zumindest eines der Folgenden zu bilden: quadratische offene Kanäle (26) im Kern (16), rautenförmige offene Kanäle (26) im Kern (16), dreieckige offene Kanäle (26) im Kern (16) und eine Kombination davon.

6. Verbundstruktur (10) nach Anspruch 5, wobei die Verbundstruktur (10) lichtdurchlässig ist.

7. Verbundstruktur (10) nach Anspruch 1, wobei zumindest eine der ersten Außenhaut (12) und der zweiten Außenhaut (14) eine darauf angeordnete Beschichtung umfasst.

8. Verbundstruktur (10) nach Anspruch 7, wobei die Beschichtung zumindest eine einer antimikrobiellen Beschichtung, einer antibakteriellen Beschichtung, einer abriebbeständigen Beschichtung, einer Ultraviolett- (UV-) beständigen Beschichtung und einer Kombination davon umfasst.

9. Verbundstruktur (10) nach Anspruch 1, wobei der Kern (16) ein Triplylaminat umfasst und die erste Außenhaut (12) und die zweite Außenhaut (14) jeweils ein Crossplylaminat umfassen.

10. Verbundstruktur (10) nach Anspruch 1, wobei die Mehrzahl von Fasern in der ersten Verbundlage quer zu der Mehrzahl von Fasern in der zweiten Verbundlage in einem Winkel von 15 bis 75 Grad angeordnet sind.

11. Verbundstruktur (10) nach Anspruch 1, wobei die Mehrzahl von Fasern in der ersten Verbundlage in Bezug auf die Mehrzahl von Fasern in der zweiten Verbundlage in einem Winkel von 90 Grad angeordnet sind.

12. Verbundstruktur (10) nach Anspruch 1, wobei die erste Verbundlage und die zweite Verbundlage Fasern unterschiedlicher Festigkeit umfassen und die erste Verbundlage E-Glas-Fasern umfasst
und die zweite Verbundlage S-Glas-Fasern umfasst.

13. Platte, umfassend die Verbundstruktur (10) nach Anspruch 6.

14. Platte nach Anspruch 13, wobei die Platte eine glatte Außenschicht umfasst, die ein nicht faserverstärktes Polyethylen umfasst.

15. Deckenabschnitt, umfassend die Platte nach Anspruch 13, wobei der Deckenabschnitt für einen Ladungsträger ausgelegt ist.

16. Wandabschnitt, umfassend die Platte nach Anspruch 13, wobei der Wandabschnitt für einen Ladungsträger ausgelegt ist.

17. Unterboden, umfassend die Platte nach Anspruch 13, wobei der Unterboden für einen Ladungsträger ausgelegt ist.

18. Tür, umfassend die Platte nach Anspruch 13, wobei die Tür für einen Ladungsträger ausgelegt ist.

19. Abschnitt einer Gehäusestruktur, umfassend die Platte nach Anspruch 13.

20. Ornament, umfassend die Verbundstruktur (10) nach Anspruch 1.

21. Verbundstruktur (10) nach Anspruch 1, wobei die Fluorokunststoffmatrix zumindest eines von Polyethylen, Polypropylen, Polyvinyliden und einer Kombination davon umfasst.

22. Verbundstruktur (10) nach Anspruch 1, wobei die Thermokunststoffmatrix ein feuerhemmendes Material umfasst.

23. Verbundstruktur (10) nach Anspruch 1, wobei die Verbindungselemente (24) mit den Rippen (18) einen Winkel zwischen etwa 0 und etwa 120 Grad bilden.

24. Konstruktion, umfassend eine Mehrzahl der Verbundstrukturen (10) nach Anspruch 5, die haftend miteinander verbunden sind.

25. Verbundstruktur (10) nach Anspruch 1, wobei jede der voneinander beabstandeten Rippen (18) sich parallel von einem Ende (20) der Verbundstruktur (10) zum gegenüberliegenden Ende (22) erstreckt.

26. Verbundstruktur (10) nach Anspruch 1, wobei die erste Außenhaut (12) und/oder die zweite Außenhaut (14) ein Duroplast-Matrixmaterial umfasst/umfassen.

## Revendications

1. Structure composite (10) comprenant :
une première peau externe (12) ;
une seconde peau externe (14) ; et
une âme (16) prise en sandwich entre la première peau externe (12) et la seconde peau externe (14) ;
dans laquelle l'âme (16) comprend : une pluralité de crêtes (18) espacées entre la première peau externe (12) et la seconde peau externe (14), chacune des crêtes (18) espacées s'étendant d'une extrémité (20) de la structure composite (10) à une extrémité (22) opposée ; et une pluralité d'éléments de raccordement (24) entre la première peau externe (12) et la seconde peau externe (14) coupant les crêtes (18) pour former des canaux ouverts (26) à l'intérieur de l'âme (16) ;
**caractérisée en ce que** :
les crêtes (18) de l'âme (16) et les éléments de raccordement (24) de l'âme (16) comprennent chacun une pluralité de couches composites comprenant au moins une première couche composite et une seconde couche composite, la première couche composite et la seconde couche composite comprenant chacune une pluralité de fibres parallèles continues unidirectionnelles dans une matrice thermoplastique, la pluralité de couches composites étant reliées ensemble pour former un stratifié composite ; et
la première peau externe (12) ainsi que la seconde peau externe (14) comprennent :
une pluralité de couches composites comprenant au moins une première couche composite et une seconde couche composite, la première couche composite et la seconde couche composite comprenant chacune une pluralité de fibres parallèles continues unidirectionnelles dans une matrice thermoplastique ; la pluralité de couches composites étant reliées ensemble afin de former un stratifié composite, et
dans laquelle la pluralité de fibres dans la première couche composite sont parallèles entre elles, et la pluralité de fibres dans la seconde couche composite sont parallèles entre elles,
dans laquelle la pluralité de fibres dans la première couche composite sont disposées transversalement par rapport à la pluralité de fibres dans la seconde couche composite à un angle supérieur de 0 degré à 90 degrés, et
dans laquelle la pluralité de fibres de la première couche composite est différente de la pluralité de fibres dans la seconde couche composite.

2. Structure composite (10) selon la revendication 1, dans laquelle au moins une crête (18) est rectangulaire du point de vue de la forme s'étendant de la une extrémité (20) à l'extrémité (22) opposée.

3. Structure composite (10) selon la revendication 1, dans laquelle les crêtes (18) et les éléments de raccordement (24) ont chacun une hauteur comprise entre 0,5 pouce et 6 pouces, lorsqu'ils sont mesurés entre la première peau externe (12) et la seconde peau externe (14).

4. Structure composite (10) selon la revendication 1, dans laquelle au moins un élément de raccordement (24) comprend un motif étagé en zigzag répété d'un seul tenant s'étendant de la une extrémité (20) à l'extrémité opposée (22) de la structure (10).

5. Structure composite (10) selon la revendication 1, dans laquelle la pluralité d'éléments de raccordement (24) entre la première peau externe (12) et la seconde peau externe (14) coupent les crêtes (18) pour former au moins l'un parmi : des canaux ouverts carrés (26) à l'intérieur de l'âme (16), des canaux ouverts en forme de diamant (26) à l'intérieur de l'âme (16), des canaux ouverts de forme triangulaire (26) à l'intérieur de l'âme (16) et leur combinaison.

6. Structure composite (10) selon la revendication 5, dans laquelle la structure composite (10) est translucide.

7. Structure composite (10) selon la revendication 1, dans laquelle au moins l'une parmi la première peau externe (12) et la seconde peau externe (14) comprend un revêtement.

8. Structure composite (10) selon la revendication 7, dans laquelle le revêtement comprend au moins l'un parmi un revêtement antimicrobien, un revêtement antibactérien, un revêtement résistant à l'abrasion, un revêtement résistant aux ultra-violets (UV) et leur combinaison.

9. Structure composite (10) selon la revendication 1, dans laquelle l'âme (16) comprend un stratifié à trois couches et la première peau externe (12) et la seconde peau externe (14) comprennent chacune un stratifié à couche en diagonale.

10. Structure composite (10) selon la revendication 1, dans laquelle la pluralité de fibres dans la première couche composite sont disposées en diagonale par rapport à la pluralité de fibres dans la seconde couche composite à un angle de 15 degrés à 75 degrés.

11. Structure composite (10) selon la revendication 1, dans laquelle la pluralité de fibres dans la première couche composite sont disposées à 90 degrés par rapport à la pluralité de fibres dans la seconde couche composite.

12. Structure composite (10) selon la revendication 1, dans laquelle la première couche composite et la seconde couche composite comprennent des fibres de différente résistance, et la première couche composite comprend des fibres de verre « E » et la seconde couche composite comprend des fibres de verre « S ».

13. Panneau comprenant la structure composite (10) selon la revendication 6.

14. Panneau selon la revendication 13, dans lequel le panneau comprend une couche externe lisse comprenant du polyéthylène non renforcé en fibres.

15. Partie de plafond comprenant le panneau selon la revendication 13, dans laquelle la partie de plafond est configurée pour un support de charge.

16. Partie de paroi comprenant le panneau selon la revendication 13, dans laquelle la partie de paroi est configurée pour un support de charge.

17. Faux plancher comprenant le panneau selon la revendication 13, dans lequel le faux plancher est configuré pour un support de charge.

18. Porte comprenant le panneau selon la revendication 13, dans laquelle la porte est configurée pour un support de charge.

19. Partie d'une structure de boîtier comprenant le panneau selon la revendication 13.

20. Ornement comprenant la structure composite (10) selon la revendication 1.

21. Structure composite (10) selon la revendication 1, dans laquelle la matrice thermoplastique comprend au moins l'un parmi le polyéthylène, le polypropylène, le polyvinylidène et leur combinaison.

22. Structure composite (10) selon la revendication 1, dans laquelle la matrice thermoplastique comprend un matériau ignifuge.

23. Structure composite (10) selon la revendication 1, dans laquelle les éléments de raccordement (24) forment un angle compris entre environ 0 degré et environ 120 degrés avec les crêtes (18).

24. Construction comprenant une pluralité de structures composites (10) selon la revendication 5 collées ensemble par adhésif.

25. Structure composite (10) selon la revendication 1, dans laquelle chacune des crêtes (18) espacées s'étend parallèlement à une extrémité (20) de la structure composite (10) jusqu'à l'extrémité (22) opposée.

26. Structure composite (10) selon la revendication 1, dans laquelle la première peau externe (12) et/ou la seconde peau externe (14) comprennent un matériau de matrice thermodurci.
